# EUROPÄISCHE PATENTSCHRIFT

(11) **EP 0 480 262 B1**
(45) Veröffentlichungstag und Bekanntmachung des Hinweises auf die Patenterteilung: **27.04.1994**
(21) Anmeldenummer: 91116525.6
(22) Anmeldetag: 27.09.1991
(51) Int. Cl.: B29B 7/72, G01N 33/44, G01N 11/12

(54) **Verfahren und Messvorrichtung zum Messen der visko-elastischen Eigenschaften von polymerem Material**
Process and apparatus for measuring the visco-elastic properties of a polymeric material
Procédé et dispositif de mesure des propriétés visco-élastiques d'un matériau polymère

(30) Priorität: 12.10.1990 DE 4032375
(43) Veröffentlichungstag der Anmeldung: 15.04.1992
(73) Patentinhaber: WERNER & PFLEIDERER GUMMITECHNIK GMBH, 57258 Freudenberg (DE)
(72) Erfinder: Limper, Andreas, Dr., W-5963 Wenden-Schönau (DE); Häder, Walter, W-5960 Olpe (DE)
(74) Vertreter: Rau, Manfred, Dr. Dipl.-Ing.

(56) Entgegenhaltungen:
- FR-A- 2 239 680
- PATENT ABSTRACTS OF JAPAN vol. 13, no. 194 (M-823)(3542) 10. Mai 1989 & JP-A-1 020 106 (ISHIKAWAJIMA HARIMA HEAVY IND CO LTD) 24. Januar 1989

## Beschreibung

Die Erfindung betrifft ein Verfahren nach dem Oberbegriff des Anspruches 1 und eine Meßvorrichtung zur Durchführung dieses Verfahrens nach dem Oberbegriff des Anspruches 7.

Polymere Materialien, wie Kunststoffe oder Kautschuke, sind in reiner Form in der Regel nicht weiterzuverarbeiten. Hierzu müssen sie mit Additiven, Stabilisatoren und gegebenenfalls Füllstoffen vermischt werden. Dieser Mischprozeß kann beispielsweise kontinuierlich in speziell ausgebildeten Schneckenmaschinen, wie Doppelschneckenextrudern, Planetenwalzenextrudern oder Einschneckenextrudern durchgeführt werden. In vielen Fällen ist dagegen die Durchführung dieses Mischprozesses auf diskontinuierlich, als chargenweise arbeitenden Maschinen empfehlenswert, und zwar insbesondere, wenn der Mischvorgang zur Schonung des Materials zeitlich gestreckt werden soll. Hierzu werden beispielsweise chargenweise arbeitende Innenmischer eingesetzt. Im Anschluß an einen solchen Mischprozeß findet noch ein weiterer Mischprozeß auf einem Mischwalzwerk statt, auf dem der Mischvorgang bei - im Vergleich zum Mischer - niedrigerer Temperatur und gegebenenfalls unter Absenkung der Temperatur durchgeführt wird.

Bei den kontinuierlichen und den diskontinuierlichen Mischverfahren soll das gesamte Material am Ende des Mischprozesses in engen Grenzen konstante Eigenschaften aufweisen. Bei den kontinuierlichen Mischverfahren ist der direkte Zugang zum Material in der Regel erst am Ende der Verarbeitungsmaschine möglich, so daß eine hier stattfindende Qualitätskontrolle erhebliche Verzögerungen gegenüber dem eigentlichen Mischprozeß aufweist. Bei der Mischung des Materials in Knetern ist der eigentliche Mischprozeß aufgrund der Messung der aktuell von diesem aufgenommenen Leistung, der Messung der Temperaturen und dgl. verhältnismäßig transparent. Die Messung spezieller Eigenschaften des Materials, wie Viskosität, Elastizität usw. ist aber während des Mischprozesses nicht möglich. Bei einem nachfolgenden Mischprozeß auf einem Walzwerk ist es dem Bedienungsmann oft aufgrund seiner Erfahrung möglich, die erwähnten Materialeigenschaften subjektiv zu beurteilen, da das in Form eines Walzfells auf der Arbeits-Walze des Mischwalzwerks befindliche Material sichtbar ist. Eine objektive Meßmethode, welche on-line arbeitet, ist aber ebenfalls nicht bekannt.

Diese eingeschränkten Möglichkeiten der On-Line-Beurteilung der Viskosität und der Elastizität des Materials stellen vor allem bei der Verarbeitung von Kautschuk ein großes Problem dar, da hier die Rohstoffe, z.B. Naturkautschuk, zu Beginn des Mischprozesses starken Schwankungen in der Viskosität unterliegen. Diese unterschiedlichen Eingangsviskositäten sollen nach dem Mischprozeß auf einen möglichst engen Bereich reduziert sein. Es besteht daher ein Bedürfnis, die aktuellen Materialeigenschaften des Materials während des Mischprozesses zu erfassen.

Es gibt zahlreiche Versuche, aus den Leistungsdaten eines Kneters, d.h. eines Innenmischers, auf die aktuelle Viskosität des Materials Rückschlüsse zu ziehen. So ist es aus der EP-A-o 172 726 bekannt geworden, aus der aktuellen Leistungsaufnahme des Antriebes des Mischers und der Temperatur des Materials im Mischer einen Rückschluß auf die Viskosität des Materials und vor allem deren Veränderung über der Zeit zu ziehen. Derartige Meßverfahren haben aber den Mangel, daß die gemessenen Daten der Temperatur und des Leistungsverlaufes im Mischer starken Schwankungen unterliegen. So ändert sich die vom Antrieb aufgenommene Leistung während jeder Umdrehung der Rotoren außerordentlich stark, und zwar bis zu 5o%, da derartige Mischer nur mit Teilfüllung betrieben werden. Während eines Mischzyklus treten Änderungen im Leistungsverlauf um bis zu 22o% der Nennleistung auf. Werden die Schwankungen der Leistungsaufnahme über jeweils einer Umdrehung durch entsprechende Kompensation in einen geglätteten Signalverlauf überführt, sind die daraus abgeleiteten aktuellen Werte verhältnismäßig ungenau. Besonders gravierend ist aber die unzureichende Möglichkeit der Temperaturmessung im geschlossenen Mischer. Wegen der hohen Viskosität vieler Materialien muß nämlich ein entsprechender Temperaturfühler sehr stabil sein und ist entsprechend zu dimensionieren. Hierdurch kann aber ein verhältnismäßig großer Wärmestrom von der Spitze des Temperaturfühlers zur - in der Regel gekühlten - Wand des Mischers fließen. Hierdurch treten Fehler in der Temperaturmessung auf, die bis zu ± 2o°C betragen können. Da ein Mischer stets nur mit Teilfüllung betrieben wird, wird der Temperaturfühler nicht während des gesamten Mischzyklus von Material umspült. Vor allem bei sehr hochviskosen Materialien, wie z.B. Naturkautschuk, bei denen der Füllgrad des Mischers besonders niedrig ist, tritt dieses Problem sehr stark in den Vordergrund.

Die vorliegende Erfindung geht von der Grund-Erkenntnis aus, daß das Mischergebnis als Resultat der Mischvorgänge im Mischer und auf dem Mischwalzwerk vorausgesetzt werden kann und daß eine Kontrolle und gegebenenfalls Korrektur der Eigenschaften des Materials in der am Ende des Mischzyklus liegenden Mischphase auf dem Mischwalzwerk erfolgen kann.

Von dieser Grund-Erkenntnis ausgehend liegt der Erfindung die Aufgabe zugrunde, ein Verfahren zum Messen der visko-elastischen Eigenschaften von polymerem Material auf einem Mischwalzwerk und eine Meßvorrichtung zur Durchführung dieses Verfahrens zu schaffen.

Diese Aufgabe wird bei einem Verfahren nach dem Oberbegriff des Anspruches 1 erfindungsgemäß durch die Merkmale im Kennzeichnungsteil des Anspruches 1 und bei einer Meßvorrichtung nach dem Oberbegriff des Anspruches 7 durch die Merkmale im Kennzeichnungsteil des Anspruches 7 gelöst.

Im Gegensatz zur Temperaturverteilung des Materials im Mischer ist die Temperaturverteilung im auf einem Mischwalzwerk befindlichen Material sehr viel gleichmäßiger. Dies gilt vor allem für die Temperatur im auf der Arbeitswalze umlaufenden Walzfell. Bei ordnungsgemäßem Betrieb des Mischwalzwerks bildet sich - in Drehrichtung der Walzen vor dem Walzenspalt - ein Materialstau, ein sogenannter Knet. Dieser ist in seinem Volumen und in seinen Eigenschaften schwankend. Deshalb ist die Aussagekraft integraler Werte, wie Spaltdruck, Antriebsmoment der Walzen und dgl. nur von eingeschränkter Bedeutung für die Beurteilung der visko-elastischen Eigenschaften des Materials. Die Erfindung lehrt dagegen, daß eine Meßvorrichtung am Walzfell anzuordnen ist. Hierdurch findet die Messung der visko-elastischen Eigenschaften des Materials stets bei einer definierten Temperatur, die über die gesamte Oberfläche des Walzfells im wesentlichen gleich ist, statt. Das Material wird von der Arbeitswalze durch einen Meßspalt gefördert. Dieser Meßspalt weist eine deutlich geringere Breite als die Walzen selbst auf, so daß von einer reproduzierbaren Keilspaltfüllung ausgegangen werden kann. Die auftretenden Strömungskräfte führen zu einer radialen und tangentialen Auslenkung des Keils. Die Auslenkungen können über geeignete Meßmethoden gemessen werden.

Vorteilhafte Weiterbildungen der Erfindung ergeben sich aus den Unteransprüchen. Ein Ausführungsbeispiel der Erfindung ist in der Zeichnung dargestellt und wird im folgenden näher beschrieben.

Es zeigen
- Fig. 1: ein Mischwalzwerk mit zwei verschiedenen Meßvorrichtungen zur Messung visko-elastischer Eigenschaften von polymerem Material,
- Fig. 2: einen Teil-Querschnitt durch das Mischwalzwerk mit einer genaueren Darstellung einer unterhalb der Arbeitswalze angeordneten Meßvorrichtung und
- Fig. 3: das Meßprinzip nach der Erfindung in Form eines Flußdiagramms.

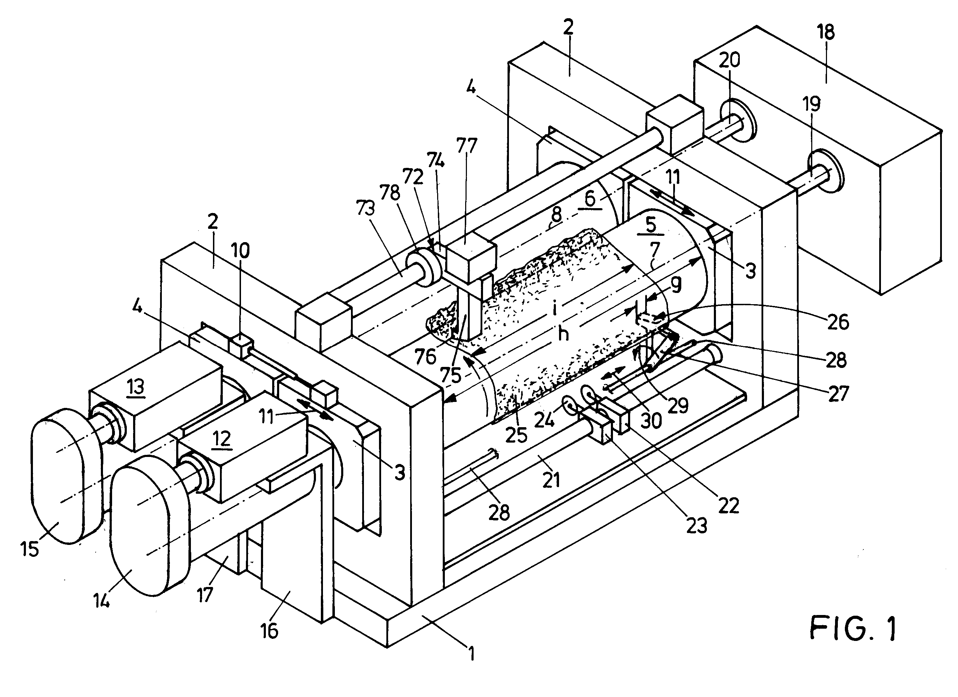

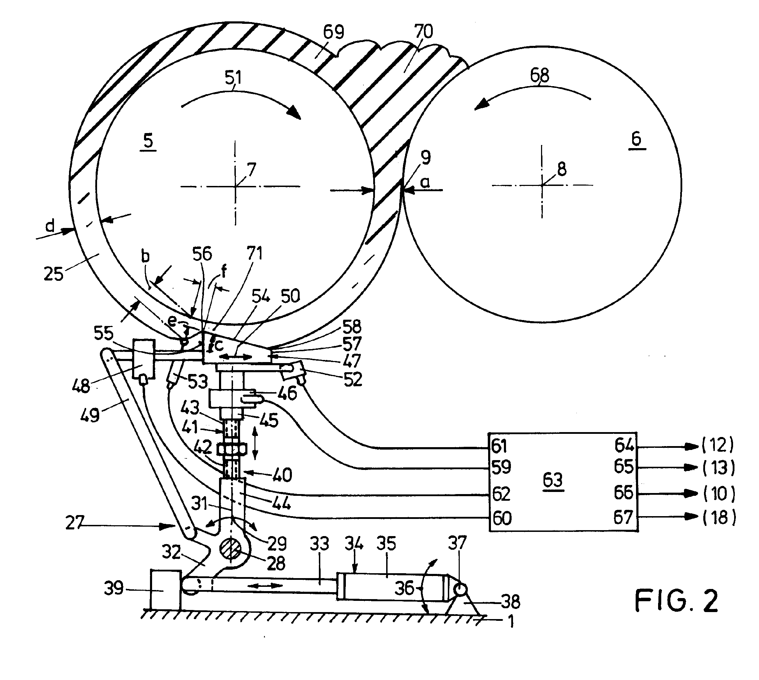

Das in Fig. 1 dargestellte Walzwerk weist einen Grundrahmen 1 auf, von dem parallel zueinander und im Abstand voneinander zwei Walzenständer 2 nach oben ragen. In jedem Walzenständer 2 sind zwei Walzenlager 3,4 angeordnet. In den beiden Paaren von Walzenlagern 3,4 sind zwei Walzen drehbar gelagert, und zwar eine in Fig. 1 als vordere Walze dargestellte Arbeits-Walze 5 und eine Andrück-Walze 6. Beide Walzen 5,6 haben im Grundsatz zueinander parallele, in der Regel in einer gemeinsamen horizontalen Ebene angeordnete Achsen 7,8. Die vorderen Walzenlager 3 sind quer zur Achse 7 in der durch die beiden Achsen 7,8 aufgespannten Ebene, also senkrecht zur Achse 7 und senkrecht zur Achse 8, verschiebbar, so daß ein nur in Fig. 2 erkennbarer Walzen-Spalt 9 zwischen den Walzen 5,6 in seiner Spaltweite a verstellbar ist. Die Walzenspaltverstellung erfolgt mittels eines hydraulisch beaufschlagbaren linearen Verstellantriebes 1o, der zwischen den beiden einander jeweils zugeordneten Walzenlagern 3,4 angreift. Die Verstellrichtung für die Arbeits-Walze 5 ist durch den Doppelpfeil 11 gekennzeichnet.

Jede Walze 5,6 wird durch einen eigenen Antriebsmotor 12,13 angetrieben, dem an der jeweiligen Walze 5 bzw. 6 jeweils ein Getriebe 14,15 zugeordnet ist. Die Antriebsmotoren 12,13 sind jeweils auf einem eigenen Lagerbock 16,17 angeordnet, der am Grundrahmen 1 angebracht ist. Auf der den Antriebsmotoren 12,13 gegenüberliegenden Seite ist eine Temperier-Einrichtung 18 angeordnet, von der aus Leitungen 19,2o in die Arbeits-Walze 5 einerseits und die Andrück-Walze 6 andererseits führen, so daß die Walzen 5,6 temperierbar sind. In den Walzenständern 2 ist weiterhin eine parallel zu den Achsen 7,8 verlaufende Führungsstange 21 angebracht, auf der Schneideinrichtungen 22,23 verschiebbar und feststellbar und in ihrem Abstand zueinander verstellbar angeordnet sind. Diese Schneideinrichtungen 22,23 tragen an ihrer der Arbeits-Walze 5 zugewandten Seite jeweils ein Rollmesser 24, mittels dessen nach Ende eines Walzvorganges aus einem auf der Arbeits-Walze 5 befindlichen Walzfell 25 Streifen herausgeschnitten werden können. Soweit das Mischwalzwerk bis hierher beschrieben ist, ist es bekannt und marktgängig und beispielsweise aus einem Prospekt "GUMMITECHNIK Hochleistungs-Mischwalzwerke für die Gummi-Mischtechnik", Veröffentlichungsnummer FBG o7.o1/1-2.o+3.o+1.o+1.o+1.o/2.o-VIII.89 KODÖ, der Werner & Pfleiderer GmbH & Co Maschinenbau, D-59o5 Freudenberg, Deutschland, bekannt.

In Fig. 1 ist noch eine Meßvorrichtung 26 zur Messung physikalischer Daten des Materials des Walzfells 25 angedeutet, die in Fig. 2 detaillierter dargestellt ist. Sie weist einen doppelarmigen Hebel 27 auf, der auf einer parallel zur Führungsstange 21 und damit den Achsen 7 und 8 verlaufenden Führungsstange 28 entsprechend dem Schwenkrichtungspfeil 29 verschwenkbar angeordnet ist. Die Führungsstange 28 ist in den Walzenständern 2 festgelegt. Außerdem ist der Hebel 27 auf der Führungsstange 28 in deren Längsrichtung entsprechend dem Verschiebepfeil 3o verschiebbar angeordnet. In seiner in Fig. 2 dargestellten zugestellten Stellung verläuft die Längsachse 31 des Hebels 27 radial zur Achse 7 der Arbeits-Walze 5. Der doppelarmige Hebel 27 weist einen unteren, gegenüber der Längsachse 31 abgewinkelten Teilhebel 32 auf, an dessen freiem Ende eine Kolbenstange 33 eines als Zustell-Antrieb 34 dienenden Kolben-Zylinder-Antriebs angelenkt ist. Der Zylinder 35 des Antriebs 34 ist entsprechend dem Schwenkrichtungspfeil 36 schwenkbar und parallel zur Führungsstange 28 verschiebbar auf einer Lagerstange 37 gelagert, die über Lagerböcke 38 auf dem Grundrahmen 1 abgestützt ist. Auf der der Kolbenstange 33 abgewandten Seite ist benachbart zum Teilhebel 32 auf dem Grundrahmen 1 eine Anschlag-Leiste 39 angebracht, durch die eine maximale Ausfahrbewegung der Kolbenstange 33 vorgegeben wird. Der zweite Teilhebel des doppelarmigen Hebels 27, der einen Haupthebel 4o bildet, ist in Richtung seiner Längsachse 31 längenverstellbar, und zwar durch eine Spindel 41 mit gegenläufigen Gewinden 42,43, die in entsprechende Gewindehülsen 44,45 des Haupthebels 4o eingreifen, so daß dieser in Richtung seiner Längsachse 31 längenverstellbar ist.

Auf der der Arbeits-Walze 5 zugewandten Gewindehülse 45 stützt sich eine Kraft-Meßeinrichtung 46 ab, die in Richtung der Längsachse 31 und damit radial zur Achse 7 wirkende Kräfte mißt. Auf dieser Kraft-Meßeinrichtung 46 stützt sich wiederum ein Meßkeil 47 ab, dessen in Richtung der Längsachse 31 auf die Meßeinrichtung 46 wirkende Kräfte also von dieser erfaßt werden. Der Meßkeil 47 ist wiederum tangential zur Arbeits-Walze 5 gegen eine Kraft-Meßeinrichtung 48 abgestützt, die mittels Stützarmen 49 am Hebel 27 angebracht ist. Die Kraft-Meßeinrichtung 48 ist in Tangentialrichtung 5o zur Arbeits-Walze 5 und - bezogen auf die Drehrichtung 51 der Arbeits-Walze 5 - hinter dem Meßkeil 47 angeordnet, so daß dort in Tangentialrichtung 5o auf den Meßkeil 47 wirkende Kräfte gemessen werden. Bei den Kraft-Meßeinrichtungen 46,48 handelt es sich um handelsübliche Geräte, beispielsweise sogenannte Kraftmeßdosen, die mit Piezoquarzen arbeiten, deren elektrische Eigenschaften sich mit ihrer kraftabhängigen Verformung ändern. In gleicher Weise können die Meßeinrichtungen 46,48 auf der Basis von Dehnmeßstreifen arbeiten. Entscheidend ist, daß sie bei den maximal auftretenden Kräften nur Verformungen im Bereich von wenigen hundertstel Millimetern aufweisen, so daß sich die Lage des Meßkeils 47 nicht nennenswert ändert.

Am Haupthebel 4o sind weiterhin noch eine Temperatur-Meßeinrichtung 52 und eine Weg-Meßeinrichtung 53 angebracht. Die Temperatur-Meßeinrichtung 52 erfaßt die Temperatur an der Oberfläche des Walzfells 25. Es kann sich beispielsweise um eine Infrarot-Meßeinrichtung handeln. Die Weg-Meßeinrichtung 53 mißt radial zur Achse 7 der Arbeits-Walze 5 die Dicke b des Walzfells 25 - bezogen auf die Drehrichtung 51 - hinter dem Meßkeil 47. Der Meßkeil 47 weist eine Keilfläche 54 auf, die unter einem Winkel c derart zur Tangentialrichtung 5o verläuft, daß die Keilfläche 54 - in Richtung Drehrichtung 51 - zur Arbeits-Walze 5 hin geneigt ist. Die an dem in Drehrichtung 51 nachlaufenden Ende des Meßkeils 47 zwischen dessen dortiger Seitenwand 55 und der Keilfläche 54 gebildete Spitze 56 wird zum Durchführen von Messungen in das Walzfell 25 eingedrückt. Zwischen der bezogen auf die Drehrichtung 51 vorlaufenden Seitenwand 57 des Meßkeils 47 und der Keilfläche 54 wird ein Einlaufbereich 58 gebildet, der unter keinen Meßbedingungen in das Walzfell 25 eintaucht.

Von den Meßeinrichtungen 46,48,52,53 werden die jeweiligen Meßdaten über Leitungen auf Eingänge 59,6o,61,62 einer Steuereinrichtung 63 gegeben, in der die Meßdaten erfaßt und verarbeitet werden und von der über Steuer-Ausgänge 64,65,66,67 Steuersignale an die Antriebsmotoren 12,13, auf den Verstellantrieb 1o und auf die Temperier-Einrichtung 18 gegeben werden.

Die Betriebsweise ist wie folgt:

Die Arbeits-Walze 5 läuft in Drehrichtung 51 um. Die Andrück-Walze 6 läuft gegensinnig in Drehrichtung 68 um. Auf die Arbeits-Walze 5 ist als zu behandelndes Material 69 ein polymerer Werkstoff, wie Kunststoff oder Kautschuk oder insbesondere Naturkautschuk, aufgelegt, der in einem Mischer bereits vorbehandelt ist.

Im Mischer sind also schon Additive, sonstige Mischungsbestandteile, Füllstoffe und dgl. zugegeben und eingemischt worden, wobei dort schon ein relativ hoher Homogenisierungsgrad erreicht ist. Auf dem Mischwalzwerk soll das Mischen in schonender Weise und bei gegenüber der Temperatur im Mischer abgesenkter Temperatur fortgesetzt werden. Das Material ist hierbei auf der Arbeits-Walze 5 in Form des bereits erwähnten Walzfells 25 aufgebracht. Am Walzen-Spalt 9 ist die Drehrichtung 51,68 beider Walzen 6,7 nach unten gerichtet, so daß sich vor dem Walzen-Spalt 9, und zwar oberhalb von diesem, ein sogenannter Knet bildet, bei dem es sich also um einen Materialstau 7o handelt. Dieses Material wird beim Umlauf der Walzen immer wieder durch den Walzen-Spalt 9 mitgenommen, während wiederum anderes Material vom Walzfell 25 in den Materialstau 7o übergeht, d.h. es findet ein ständiger Materialaustausch zwischen dem Walzfell 25 und dem Materialstau 7o statt. Die durchschnittliche Dicke d des Walzfells 25 wird wesentlich bestimmt durch die Spaltweite a des Walzen-Spaltes 9.

Der normale Mischprozeß ist in Gang gesetzt worden, ohne daß der Meßkeil 47 zugestellt war, d.h. er befand sich in einer weggeschwenkten Stellung, in der die Kolbenstange 33 in den Zylinder 35 eingefahren ist. Um Messungen durchführen zu können, wird der Antrieb 34 hydraulisch beaufschlagt, so daß die Kolbenstange 33 ausgefahren wird. Der Meßkeil 47 wird hierdurch in die in der Zeichnung dargestellte Meßstellung verschwenkt, wobei seine Lage, in der seine Längsachse 31 exakt radial zur Achse 7 verläuft, durch die Anschlag-Leiste 39 vorgegeben wird. Die Längeneinstellung des Hebels 27 kann vorher erfolgt sein. Die Spindel 41 kann aber auch in zugestelltem Zustand des Meßkeils 47 in der Länge verstellt werden, wodurch der Abstand e der Spitze 56 von der Arbeits-Walze 5 verändert wird. Solche Veränderungen dieses Abstandes e können also auch während der Messungen erfolgen.

Das Material 69 wird in den zwischen der Keilfläche 54 und der Arbeits-Walze 5 gebildeten, sich in Drehrichtung 51 verjüngenden, also keilförmigen Meßspalt 71 gefördert. Im Einlaufbereich 58 des Meßspaltes 71 bildet sich ein komplexes Strömungsprofil aus, das aus den visko-elastischen Eigenschaften des Materials, der Schleppgeschwindigkeit, den geometrischen Bedingungen, sowie der Materialtemperatur resultiert. Die auftretenden Strömungskräfte werden in der bereits geschilderten Weise von den Kraft-Meßeinrichtungen 46,48 gemessen und auf die Steuereinrichtung 63 gegeben. Mit der Temperatur-Meßeinrichtung 52 wird die Temperatur des Materials unmittelbar vor dem Meßspalt 71 gemessen. Mit der Weg-Meßeinrichtung 53 wird die Dicke b des Walzfells 25 in einem vorgegebenen Abstand f in Drehrichtung 51 hinter der Spitze 56, also hinter der engsten Stelle des Meßspaltes 71 gemessen, wodurch im Vergleich zum Abstand e der Spitze 56 von der Arbeits-Walze 5 ein Maß für die Elastizität des Materials gewonnen wird.

Durch die Kraftmessungen mittels der Meßeinrichtungen 46,48 wird die Summe der Auswirkungen der im Meßspalt 71 auf das Material 69 ausgeübten Dehndeformation und Scherdeformation erfaßt. Die Dehndeformation resultiert aus den elastischen Eigenschaften des Materials 69, während die Scherdeformation aus den viskosen Eigenschaften des Materials 69 resultiert. Um die viskosen und elastischen Materialeigenschaften zur sicheren Erkennung von Fehlchargen unterscheiden zu können, wird noch über die Weg-Meßeinrichtung 53 ein Maß für die elastischen Eigenschaften des Materials 69 gewonnen.

Aus den gemessenen Werten werden Steuersignale abgeleitet, mittels derer zum einen die Drehzahl der Arbeits-Walze 5 geregelt wird. In gleicher Weise wird eine hiervon abweichende Drehzahl der Andrück-Walze 6 angesteuert. Das bei derartigen Mischwalzwerken üblicherweise von 1 abweichende Verhältnis der Drehzahlen der beiden Walzen 5,6 zueinander wird als Friktion bezeichnet, wobei entscheidend die unterschiedlichen Umfangsgeschwindigkeiten der beiden Walzen 5,6 voneinander sind, um im Walzen-Spalt 9 durch die Relativgeschwindigkeit der Walzen 5,6 gegeneinander eine hohe Beanspruchung und Umwälzung des Materials 69 im Walzfell 25 zu erreichen. Außerdem wird je nach den Meßergebnissen die Spaltweite a des Walzen-Spaltes 9 verstellt, und zwar durch entsprechende Ansteuerung der Verstellantriebe 1o. Die Temperier-Einrichtung 18 wird angesteuert, um gegebenenfalls die Temperatur der Walzen 5,6 zu erhöhen oder abzusenken.

Übliche Spaltweiten a für den Walzen-Spalt 9 sind - soweit es um die Einstellbarkeit geht - zwischen o,5 und 5o mm, während übliche Betriebs-Spaltweiten a zwischen o,5 und 5 mm liegen. Der Abstand e der Spitze 56 von der Walze 5, also die Weite des Meßspaltes 71 an seiner engsten Stelle beträgt 3o bis 9o% und bevorzugt 5o bis 7o% der Spaltweite a.

Eine abgewandelte Meßvorrichtung 72 ist in Fig. 1 angedeutet, wobei selbstverständlich in der Regel nur eine Meßvorrichtung 26 oder eine Meßvorrichtung 72 vorhanden sind. Diese Meßvorrichtung 72 ist oberhalb der Achsen 7,8 vorgesehen. Sie weist eine auf den Walzenständern 2 angebrachte, parallel zu den Achsen 7,8 verlaufende Führungsstange 73 auf, auf der ein verschwenkbarer Hebel 74 angebracht ist, der etwa horizontal verläuft. An diesem Hebel 74 ist eine etwa radial zur Achse 7 der Arbeits-Walze 5 verlaufende Stütze 75 angebracht, an deren der Arbeits-Walze 5 zugewandtem Ende ein Meßkeil 76 angebracht ist, der in gleicher Weise ausgebildet ist, wie der Meßkeil 47. Auf dem Hebel 74 ist ein Gewicht 77 angebracht, so daß der Meßkeil 76 mit einer vorgegebenen Kraft in das Walzfell 25 gedrückt wird. Auf der Führungsstange 73 ist eine Winkel-Meßeinrichtung 78 angebracht, mittels derer Winkeländerungen des Hebels 74 gemessen werden können, wodurch wiederum der Abstand seiner Spitze von der Arbeits- Walze 5 gemessen wird. Während also bei dem Ausführungsbeispiel nach Fig. 2 mit einem fest eingestellten Meßspalt 71 gearbeitet wird und die hierbei auftretenden Kräfte gemessen werden, werden bei dieser Ausführungsform die Kräfte, nämlich durch das Gewicht 77, konstant gehalten und die Größe des Meßspaltes erfaßt. Eine Temperatur-Meßeinrichtung und eine Weg-Meßeinrichtung zur Erfassung der Elastizität des Materials kann in gleicher Weise wie bei dem Ausführungsbeispiel nach Fig. 2 vorgesehen sein.

Wenn nicht beide Walzen 5,6 von jeweils einem eigenen Antriebsmotor 12,13 angetrieben werden, sondern von einem gemeinsamen Antriebsmotor, so kann der Ausgang 65 der Steuereinrichtung 63 auf ein verstellbares Getriebe gehen, mittels dessen die Friktion zwischen den Walzen 5,6 veränderbar ist.

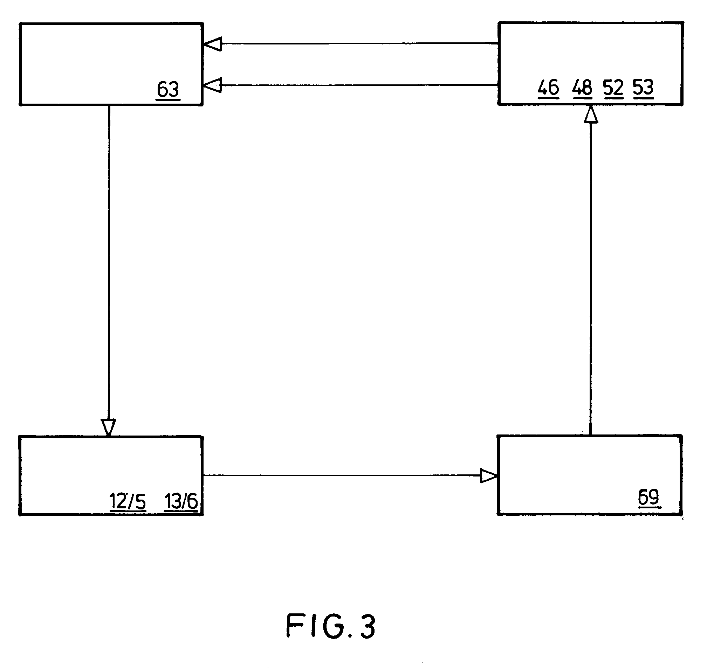

In Fig. 3 ist noch einmal übersichtlich schematisch das Prinzip der On-Line-Erfassung der physikalischen Daten des Materials 69 und deren Einsatz zur Steuerung des Mischwalzwerks sowie zur Sollwertänderung für den vorausgehenden Mischvorgang im Innenmischer dargestellt.

Die Erstreckung g des Meßkeils 47 und in gleicher Weise des Meßkeils 76 in Richtung der Achsen 7,8 ist sehr viel kleiner als die Länge h der Walzen 5,6 in Richtung ihrer Achsen 7 bzw. 8. Die Erstreckung g ist also auch erheblich kleiner als die Länge i des auf der Walze 5 befindlichen Walzfells 25. Die Erstreckung g liegt im Bereich von 1 bis 15% der Länge h.

## Patentansprüche

1. Verfahren zum Messen der visko-elastischen Eigenschaften von polymerem Material, insbesondere von Kunststoffen oder Kautschuk, auf einem Mischwalzwerk, das mindestens zwei unter Bildung eines Walzen-Spaltes (9) zueinander angeordnete, antreibbare Walzen (5,6) aufweist, wobei das Material (69) auf einer Arbeits-Walze (5) in Form eines Walzfells (25) angeordnet ist, dadurch gekennzeichnet, daß das Material (69) des Walzfells (25) durch einen sich in Drehrichtung (51) der Arbeits-Walze (5) verjüngenden Meßspalt (71) gefördert wird, der durch die Arbeits-Walze (5) und eine Keilfläche (54) eines etwa radial zur Achse (7) der Arbeits-Walze (5) in das Walzfell (25) gedrückten Meßkeils (47,76) begrenzt ist, und daß die Weite (e) des Meßspaltes (71) und die auf den Meßkeil (47,76) wirkenden Kräfte erfaßt werden.

2. Verfahren nach Anspruch 1, dadurch gekennzeichnet, daß der Meßkeil (47) auf eine vorgegebene Weite (e) des Meßspaltes (71) in das Walzfell (25) gedrückt wird und daß die vom Walzfell (25) radial auf ihn wirkenden Kräfte erfaßt werden.

3. Verfahren nach Anspruch 1 oder 2, dadurch gekennzeichnet, daß der Meßkeil (47) auf eine vorgegebene Weite (e) des Meßspaltes (71) in das Walzfell (25) gedrückt wird und daß die vom Walzfell (25) tangential auf ihn wirkenden Kräfte erfaßt werden.

4. Verfahren nach Anspruch 1, dadurch gekennzeichnet, daß der Meßkeil (76) mit einer vorgegebenen Kraft in das Walzfell (25) gedrückt wird und daß die Weite des Meßspaltes erfaßt wird.

5. Verfahren nach einem der Ansprüche 1 bis 4, dadurch gekennzeichnet, daß die Dicke (b) des Walzfells (25) in einem vorgegebenen Abstand (f) - in Drehrichtung (51) der Arbeits-Walze (5) - hinter dem Meßspalt (71) erfaßt wird.

6. Verfahren nach einem der Ansprüche 1 bis 5, dadurch gekennzeichnet, daß die Temperatur des Walzfells (25) - in Drehrichtung (51) der Arbeits-Walze (5) - vor dem Meßspalt (71) erfaßt wird.

7. Meßvorrichtung zur Durchführung des Verfahrens nach einem der Ansprüche 1 bis 6, dadurch gekennzeichnet, daß sie einen gegen die Arbeits-Walze (5) zustellbaren Meßkeil (47,76) aufweist und daß mit dem Meßkeil (47) mindestens eine Meßeinrichtung (46,48) zur Messung der an ihm angreifenden Kräfte oder eine Meßeinrichtung (78) zum Messen der Eindringtiefe des Meßkeils (76) in das Walzfell (25) gekoppelt ist.

8. Meßvorrichtung nach Anspruch 7, dadurch gekennzeichnet, daß sie in Richtung der Arbeits-Walze (5) verstellbar ist.

9. Meßvorrichtung nach Anspruch 7 oder 8, dadurch gekennzeichnet, daß der Meßkeil (47,76) eine Erstreckung (g) in Richtung der Achse (7) der Arbeits-Walze (5) hat, die etwa 1 bis 15% der Länge (h) der Arbeits-Walze (5) entspricht.

10. Meßvorrichtung nach einem der Ansprüche 7 bis 9, dadurch gekennzeichnet, daß der Meßkeil (47,76) an einem schwenkbar gelagerten Hebel (27,74) angebracht ist, der in eine Stellung schwenkbar ist, in der er etwa radial zur Achse (7) der Arbeits-Walze (5) gegenüber letzterer zugestellt ist.

11. Meßvorrichtung nach einem der Ansprüche 7 bis 1o, dadurch gekennzeichnet, daß der Meßkeil (47) mittels eines Zustell-Antriebs (34) in eine Stellung etwa radial zur Achse (7) der Arbeits-Walze (5) zustellbar ist.

12. Meßvorrichtung nach Anspruch 1o, dadurch gekennzeichnet, daß der Meßkeil (47) radial zur Achse (7) der Arbeits-Walze (5) verstellbar ist.

13. Meßvorrichtung nach einem der Ansprüche 7 bis 12, dadurch gekennzeichnet, daß der Meßkeil (47) gegen eine Kraft-Meßeinrichtung (46) zur Messung von radial zur Achse (7) der Arbeits-Walze (5) auf ihn wirkenden Kräften abgestützt ist.

14. Meßvorrichtung nach einem der Ansprüche 7 bis 13, dadurch gekennzeichnet, daß der Meßkeil (47) gegen eine Kraft-Meßeinrichtung (48) zur Messung von tangential zur Arbeits-Walze (5) auf ihn wirkenden Kräften abgestützt ist.

15. Meßvorrichtung nach einem der Ansprüche 7 bis 1o, dadurch gekennzeichnet, daß der Hebel (74) oberhalb der Arbeits-Walze (5) angeordnet und mit einem Gewicht (77) vorgegebener Größe belastet ist.

16. Meßvorrichtung nach Anspruch 15, dadurch gekennzeichnet, daß dem Hebel (74) eine Winkel-Meßeinrichtung (78) zugeordnet ist.

17. Meßvorrichtung nach einem der Ansprüche 7 bis 16, dadurch gekennzeichnet, daß dem Meßspalt (71) - bezogen auf die Drehrichtung (51) der Arbeits-Walze (5) - eine Temperatur-Meßeinrichtung (52) vorgeordnet ist.

18. Meßvorrichtung nach einem der Ansprüche 7 bis 17, dadurch gekennzeichnet, daß dem Meßspalt (71) - bezogen auf die Drehrichtung (51) der Arbeits-Walze (5) - eine Weg-Meßeinrichtung (53) in vorgegebenem Abstand (f) nachgeordnet ist.

19. Meßvorrichtung nach einem der Ansprüche 7 bis 18, dadurch gekennzeichnet, daß die Meßeinrichtungen (46,48,52,53) auf Eingänge (59,6o,61,62) einer Steuereinrichtung (63) geschaltet sind und daß Ausgänge (64,65,66,67) der Steuereinrichtung (63) auf mindestens einen Antriebsmotor (12,13) für die Walzen (6,7) und/oder einen Verstellantrieb (1o) zur Einstellung des Walzen-Spalts (9) und/oder eine Temperier-Einrichtung (18) geschaltet sind.

## Claims

1. A method for the measurement of visco-elastic properties of a polymer material, in particular of plastics or rubber, on a mixing mill, comprising at least two driveable rolls (5, 6) arranged facing each other while forming a roll gap (9), the material (69) being arranged on a work roll (5) in form of a rolled sheet (25), characterized in that the material (69) of the rolled sheet (25) is conveyed through a measuring gap (71) tapering into the rotational direction (51) of the work roll (5), which gap (71) is limited by the work roll (5) and a wedge surface (54) of a measuring wedge (47, 76) which is pressed approximately radially to the axis (7) of the work roll (5) into the rolled sheet (25), and in that the width (e) of the measuring gap (71) and the forces acting onto the measuring wedge (47, 76) are detected.

2. A method according to claim 1, characterized in that the measuring wedge (47) is pressed into the rolled sheet (25) to a predetermined width (e) of the measuring gap (71) and in that the forces of the rolled sheet (25) radially acting onto the measuring wedge (47) are detected.

3. A method according to claim 1 or 2, characterized in that the measuring wedge (47) is pressed into the rolled sheet (25) to a predetermined width (e) of the measuring gap (71) and in that the forces of the rolled sheet (25) acting tangentially onto the measuring wedge (47) are detected.

4. A method according to claim 1, characterized in that the measuring wedge (76) is pressed into the rolled sheet (25) with a predetermined force and in that the width of the measuring gap is detected.

5. A method according to one of claims 1 to 4, characterized in that the thickness (b) of the rolled sheet (25) is detected at a predetermined distance (f) - in the rotational direction (51) of the work roll (5) - behind the measuring gap (71).

6. A method according to one of claims 1 to 5, characterized in that the temperature of the rolled sheet (25) is detected - in the rotational direction (51) of the work roll (5) - before the measuring gap (71).

7. A measuring device to carry out the method according to one of the claims 1 to 6, characterized in that it comprises a measuring wedge (47, 76) which can be advanced towards the work roll (5) and in that at least one measuring device (46, 48) for the measurement of the forces acting onto the measuring wedge (47) or one measuring device (78) for the measurement of the penetration depth of the measuring wedge (76) into the rolled sheet (25) is connected with the measuring wedge (47).

8. A measuring device according to claim 7, characterized in that it is adjustable in the direction to the work roll (5).

9. A measuring device according to claim 7 or 8, characterized in that the measuring wedge (47, 76) has an extension (g) in the direction of the axis (7) of the work roll (5), which extension (g) corresponds to approximately 1 to 15 % of the length (h) of the work roll (5).

10. A measuring device according to one of claims 7 to 9, characterized in that the measuring wedge (47, 76) is arranged on a pivoted lever (27, 74), which can be pivoted to a position, in which it is advanced towards the work roll (5) approximately radially to the axis (7) of the work roll (5).

11. A measuring device according to one of claims 7 to 10, characterized in that the measuring wedge (47) is advanceable to a position approximately radial to the axis (7) of the work roll (5) by means of an advancing drive (34).

12. A measuring device according to claim 10, characterized in that the measuring wedge (47) is adjustable radially to the axis (7) of the work roll (5).

13. A measuring device according to one of claims 7 to 12, characterized in that the measuring wedge (47) is supported against a force measuring device (46) for the measurement of forces acting (47) radially to the axis (7) of the work roll (5) onto the measuring wedge.

14. A measuring device according to one of claims 7 to 13, characterized in that the measuring wedge (47) is supported against a force measuring device (48) for the measurement of forces acting (47) tangentially to the work roll (5) onto the measuring wedge.

15. A measuring device according to one of claims 7 to 10, characterized in that the lever (74) is arranged above the work roll (5) and is loaded with a weight (77) of a predetermined dimension.

16. A measuring device according to claim 15, characterized in that an angle measuring device (78) is associated to the lever (74).

17. A measuring device according to one of claims 7 to 16, characterized in that a temperature measuring device (52) is arranged before the measuring gap (71) - related to the rotational direction (51) of the work roll (5).

18. A measuring device according to one of claims 7 to 17, characterized in that a distance measuring device (53) is arranged at a predetermined distance (f) behind the measuring gap (71) - related to the rotational direction (51) of the work roll (5).

19. A measuring device according to one of claims 7 to 18, characterized in that the measuring devices (46, 48, 52, 53) are connected to inputs (59, 60, 61, 62) of a control device (63) and in that outputs (64, 65, 66, 67) of the control device (63) are connected to at least one driving motor (12, 13) for the rolls (6, 7) and/or an adjustment drive (10) for the adjustment of the roll gap (9) and/or a tempering device (18).

## Revendications

1. Procédé pour mesurer les propriétés visco-élastiques d'un matériau polymère, en particulier de matières plastiques ou de caoutchouc, sur un moulin-mélangeur, qui présente du moins deux cylindres (5, 6) actionnables arrangés l'un par rapport à l'autre en formant un espacement entre cylindres (9), le matériau (69) étant arrangé sur un cylindre de travail (5) du type d'une feuille roulée (25), caractérisé en ce que le matériau (69) de la feuille roulée (25) est transporté à travers un espacement de mesure (71), qui s'éffile dans le sens de rotation (51) du cylindre de travail (5) et qui est défini par le cylindre de travail (5) et une face de coin (54) d'un coin de mesure (47, 76) enfoncé dans la feuille roulée à peu près radialement par rapport à l'axe (7) du cylindre de travail (5), et en ce que la largeur (e) de l'espacement de mesure (71) et les forces agissant sur le coin de mesure (47, 76) sont détectées.

2. Procédé selon la revendication 1, caractérisé en ce que le coin de mesure (47) est enfoncé dans la feuille roulé (25) sur une largeur (e) pré-définie de l'espacement de mesure (71) et en ce que les forces agissant sur lui radialement à partir de la feuille roulée (25) sont détectées.

3. Procédé selon la revendication 1 ou 2, caractérisé en ce que le coin de mesure (47) est enfoncé dans la feuille roulée (25) sur une largeur (e) prédéfinie de l'espacement de mesure (71) et en ce que les forces agissant sur lui tangentiellement à partir de la feuille roulée (25) sont détectées.

4. Procédé selon la revendication 1, caractérisé en ce que le coin de mesure (76) est enfoncé dans la feuille roulée (25) à une force prédéfinie et en ce que la largeur de l'espacement de mesure est détectée.

5. Procédé selon l'une quelconque des revendications 1 à 4, caractérisé en ce que l'épaisseur (b) de la feuille roulée (25) est détectée à une distance (f) prédéfinie - dans le sens de rotation (51) du cylindre de travail (5) - en aval de l'espacement de mesure (71).

6. Procédé selon l'une quelconque des revendications 1 à 5, caractérisé en ce que la température de la feuille roulée (25) - dans le sens de rotation (51) du cylindre de travail (5) - est détectée en amont de l'espacement de mesure (71).

7. Dispositif de mesure pour réaliser le procédé selon l'une quelconque des revendications 1 à 6, caractérisé en ce qu'il présente un coin de mesure (47, 76) avancable envers le cylindre de travail (5) et en ce que du moins un dispositif de mesure (46, 48) pour mesurer les forces agissant sur le coin de mesure (47, 76) ou un dispositif de mesure (78) pour mesurer la profondeur de pénétration du coin de mesure (76) dans la feuille roulée (25) est attelé au coin de mesure (47).

8. Dispositif de mesure selon la revendication 7, caractérisé en ce qu'il est ajustable dans le sens du cylindre de travail (5).

9. Dispositif de mesure selon la revendication 7 ou 8, caractérisé en ce que, dans le sens de l'axe (7) du cylindre de travail (5), le coin de mesure (47, 76) présente une portée (g) qui correspond à environ 1 à 15 % de la longeur (h) du cylindre de travail (5).

10. Dispositif de mesure selon l'une quelconque des revendications 7 à 9 caractérisé en ce que le coin de mesure (47, 76) est installé sur un levier (27, 74) logé pivotamment, qui est pivotable dans une position, dans laquelle il est avancé envers le cylindre de travail (5) à peu près radialement par rapport à l'axe (7) du cylindre de travail (5).

11. Dispositif de mesure selon l'une quelconque des revendications 7 à 10, caractérisé en ce que le coin de mesure (47) est avancable par le biais d'une commande d'avancement (34) dans une position à peu près radiale par rapport à l'axe (7) du cylindre de travail (5).

12. Dispositif de mesure selon la revendication 10, caractérisé en ce que le coin de mesure (47) est ajustable radialement par rapport à l'axe (7) du cylindre de travail (5).

13. Dispositif de mesure selon l'une quelconque des revendications 7 à 12, caractérisé en ce que le coin de mesure (47) est supporté sur un dispositif de mesure de force (46) pour mesurer des forces agissant sur lui radialement par rapport à l'axe (7) du cylindre de travail (5).

14. Dispositif de mesure selon l'une quelconque des revendications 7 à 13, caractérisé en ce que le coin de mesure (47) est supporté sur un dispositif de mesure de force (48) pour mesurer des forces agissant sur lui tangentiellement par rapport au cylindre de travail (5).

15. Dispositif de mesure selon l'une quelconque des revendications 7 à 10, caractérisé en ce que le levier (74) est placé au-dessus du cylindre de travail (5) et chargé d'un poids (77) de dimension pré-définie.

16. Dispositif de mesure selon la revendication 15, caractérisé en ce qu'un dispositif de mesure d'angle (78) est conjugué au levier (74).

17. Dispositif de mesure selon l'une quelconque des revendications 7 à 16, caractérisé en ce que - rapporté au sens de rotation (51) du cylindre de travail (5) - un dispositif de mesure de température (52) est en amont de l'espacement de mesure (71).

18. Dispositif de mesure selon l'une quelconque des revendications 7 à 17, caractérisé en ce que - rapporté au sens de rotation (51) du cylindre de travail (5) - un dispositif de mesure de déplacement (53) est en aval de l'espacement de mesure (71) à une distance prédéfinie (f).

19. Dispositif de mesure selon l'une quelconque des revendications 7 à 18, caractérisé en ce que les dispositifs de mesures (46, 48, 52, 53) sont reliés à des entrées (59, 60, 61, 62) d'un dispositif de commande (63) et en ce que des sorties (64, 65, 66, 67) du dispositif de commande (63) sont reliées à du moins un moteur de commande (12, 13) pour les cylindres (6, 7) et/ou à une commande ajustable (10) pour régler l'espacement entre cylindres (9) et/ou à un dispositif d'équilibrance de température (18).
